Europäisches Patentamt

European Patent Office

Office européen des brevets

(19)

(11) Veröffentlichungsnummer: **0 234 203**
**B1**

(12) **EUROPÄISCHE PATENTSCHRIFT**

(45) Veröffentlichungstag der Patentschrift:
13.06.90

(21) Anmeldenummer: 87100230.9

(22) Anmeldetag: 09.01.87

(51) Int. Cl.⁵: **B62D 55/06**, B62D 55/24,
B62D 55/088

(54) Raupenfahrzeug zum Kontrollieren von Röhren und Kanälen.

(30) Priorität: 15.02.86 DE 3604880

(43) Veröffentlichungstag der Anmeldung:
02.09.87 Patentblatt 87/36

(45) Bekanntmachung des Hinweises auf die Patenterteilung:
13.06.90 Patentblatt 90/24

(84) Benannte Vertragsstaaten:
AT BE CH DE ES FR GB GR IT LI LU NL SE

(56) Entgegenhaltungen:
DE-A- 2 607 412
DE-A- 3 319 067
GB-A- 106 353
US-A- 1 829 143

NUCLEAR ENGINEERING INTERNATIONAL, Band 26,
Nr. 313, Mai 1981, Seiten 21,22; "Tractor succeeds
where submarine fails"

(73) Patentinhaber: Electronic Apparatebau Gesellschaft
m.b.H., Dürenbodenstrasse 7,
D-8985 Hirschegg/Kleinwalsertal(DE)

(72) Erfinder: Riezler, Karl-Heinz, Erlenweg 1,
D-8963 Waltenhofen(DE)

(74) Vertreter: Hübner, Hans-Jürgen, Dipl.-Ing.,
Mozartstrasse 31, D-8960 Kempten/Allgäu(DE)

ACTORUM AG

## Beschreibung

Die Erfindung betrifft ein Raupenfahrzeug für den Einsatz in Röhren und Kanälen, insbesondere zum Transport einer Fernsehkamera, mit Fahrgestell, Antriebsmotor, Getriebe sowie einer vorderen und einer hinteren Welle, von denen mindestens eine mit dem Getriebe in Antriebseingriff steht, und mit vier Rädern, die paarweise je von einem endlosen Riemen umschlungen sind, wobei das Fahrgestell von einem kastenförmigen Gehäuse gebildet wird, aus dessen Seitenwänden die Wellen herausragen, und am Gehäuse Seitenschilde lösbar befestigt sind, die die Riemen wenigstens teilweise seitlich abdecken und je mit dem Gehäuse einen Spalt begrenzen, in den der Riemen eingreift.

Die US-A 1 829 143 zeigt ein derartiges Raupenfahrzeug, das in unterirdischen Leitungen eingesetzt wird, um Kabel einzuziehen. Das Gehäuse setzt sich aus einzelnen Sektionen zusammen, die teilweise hohl ausgebildet sind und im Bereich der angetriebenen Welle nach unten offen sind. Die Riemen haben eine glatte Innenfläche, die um glatt ausgebildete Außenflächen der Räder herumgeführt sind. Die Seitenschilde überdecken die Laufflächen des oberen Trums der Riemen und stehen seitlich geringfügig über die Riemen vor. Die Wellen werden von den Seitenschilden nicht abgedeckt. Die zwischen dem oberen Trum und dem unteren Trum jedes Riemens befindlichen Hohlräume zwischen den Wellen sind von außen her frei zugänglich. Das bekannte Raupenfahrzeug kann nur in sauberen Leitungen eingesetzt werden, weil Schmutz und Sand ungehindert an die Innenseite der Riemen gelangen und sich an den Wellenenden festsetzen kann. Dies würde zu einem hohen Verschleiß des Antriebs führen. Auch würde ein sofortiges Verklemmen der Riemen an den Seitenschilden auftreten und im übrigen einen hohen Verschleiß der Riemen zur Folge haben. Außerdem können Schmutz und Sand in das unten offene Gehäuse im Bereich des Antriebes eindringen und hier ebenfalls schnell Betriebsstörungen hervorrufen. Die glatten Wellenenden übertragen die Antriebskraft auf den Riemen ausschließlich durch Haftreibung. Bei Feuchtigkeitseinflüssen kann sich auf den Wellenenden ein Schmierfilm bilden, der die Riemen durchrutschen läßt.

Aus der GB-A 106 353 ist ein Riemen für Raupenfahrzeuge bekannt, dessen Querschnitt im wesentlichen T-förmig ist, der also einen schmalen Rumpfbereich und unter Bildung von Ringschultern einen breiten Kopf aufweist. Der Rumpf besteht aus einzelnen Blöcken, sodaß der Riemen formschlüssig mit Zahnrädern in Eingriff gebracht werden kann. Irgendwelche Mittel, die verhindern, daß Sand und Schmutz zwischen Riemen und Zahnräder eindringen können, sind nicht offenbart.

Aufgabe der Erfindung ist es, ein Raupenfahrzeug der eingangs genannten Art so auszubilden, daß es für die Inspektion von Schmutzwasserkanälen eingesetzt werden kann, ohne daß Sand, Schmutz und Flüssigkeit in das Innere des Raupenfahrzeugs und insbesondere zwischen die Antriebsräder und die Riemen und natürlich auch in das Getriebe eindringen können.

Diese Aufgabe wird bei einem Raupenfahrzeug der eingangs genannten Art erfindungsgemäß dadurch gelöst, daß die vier Räder als Zahnräder ausgebildet sind, daß jeder Riemen im Querschnitt T-förmig mit einem schmalen Rumpf und unter Bildung seitlicher Schultern mit einem verbreiterten Kopf ausgebildet ist, daß am Rumpf jedes Riemens eine Innenverzahnung ausgebildet ist, die mit den Zahnrädern in Eingriff steht, daß das Gehäuse allseitig geschlossen ist, daß jedes Seitenschild zwei Zahnräder und den Rumpf des sie verbindenden Zahnriemens ringsum seitlich abdeckt, daß der Spalt ein ringsum verlaufender Umfangsspalt ist, der von dem Zahnriemen nach außen geschlossen ist und daß beidseitig benachbart jedes Umfangsspaltes an der Seitenwand des Gehäuses und dem Seitenschild ringsum verlaufende Gleitflächen ausgebildet sind, an denen der Zahnriemen mit seinen seitlichen Schultern abdichtend anliegt.

Die großflächigen Seitenschilde decken nicht nur die Zahnräder vollständig ab, sondern bilden eine ringsumlaufende Gleitfläche für die eine Seite des Riemenkopfes. Die andere Seite liegt an einer entsprechenden Gleitfläche des Gehäuses an. Zwischen Seitenschild und Gehäuse wird ein ringsumlaufender Umfangsspalt gebildet, in dem der gezahnte Rumpf des Riemens geführt ist und in den die Zahnräder eintauchen. Dieser Umfangsspalt ist durch den eng an den Gleitflächen anliegenden Zahnriemen hermetisch geschlossen. Der Rumpf des Zahnriemens, die Zahnräder und das Getriebe sind somit gegen das Eindringen von Schmutz geschützt.

Mit der Abdichtung der Riemenantriebe beschäftigt sich keiner der beiden bekannten Vorschläge, vielmehr gehen diese von dem üblichen Konstruktionsprinzip aus, daß die Riemen ausschließlich mit drehbaren Wellen oder Rädern, nicht aber mit stationären Teilen in Kontakt kommen. Mit diesem Vorurteil bricht die vorliegende Erfindung, die ausdrücklich beidseitige stationäre Gleitflächen für jeden der Riemen vorsieht, um eine Ringsumabdichtung zu schaffen.

Ausgestaltungen und Weiterbildungen der Erfindung sind Gegenstände der Unteransprüche.

Sowohl das Gehäuse als auch die Seitenschilde sind aus schwerem Gußmaterial gefertigt. Das Fahrzeug soll ein hohes Eigengewicht haben, womit einmal die Bodenhaftung vergrößert wird, zum anderen aber die enge Anlage des gedehnten Zahnriemens an den Gleitflächen des Gehäuses und der Seitenschilde insbesondere im Bodenbereich erhöht wird, weil hier die Gefahr des Einbringens von Fremdkörpern am größten ist.

Anhand der Zeichnung, die ein Ausführungsbeispiel darstellt, sei die Erfindung näher beschrieben. Es zeigt

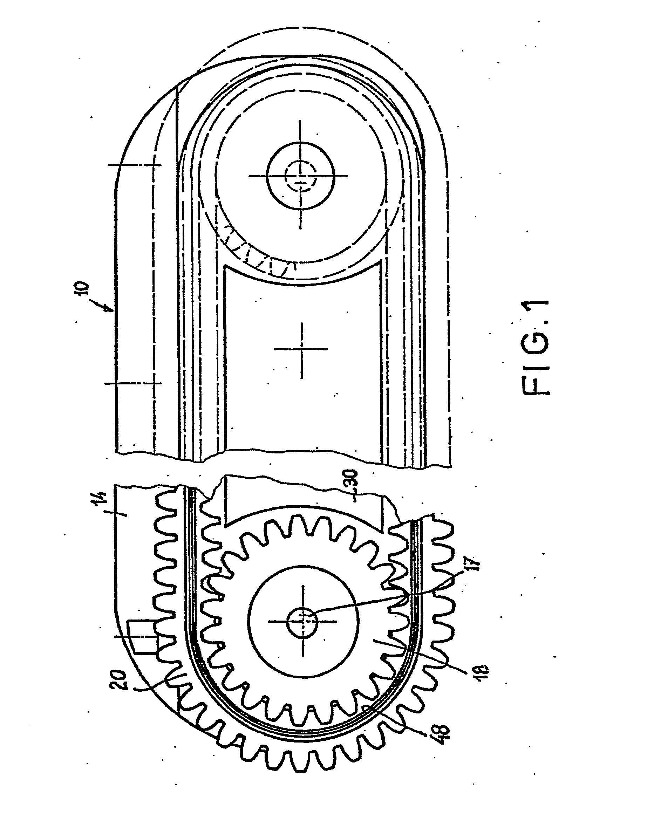

FIG. 1 eine Seitenansicht des Raupenfahrzeuges,

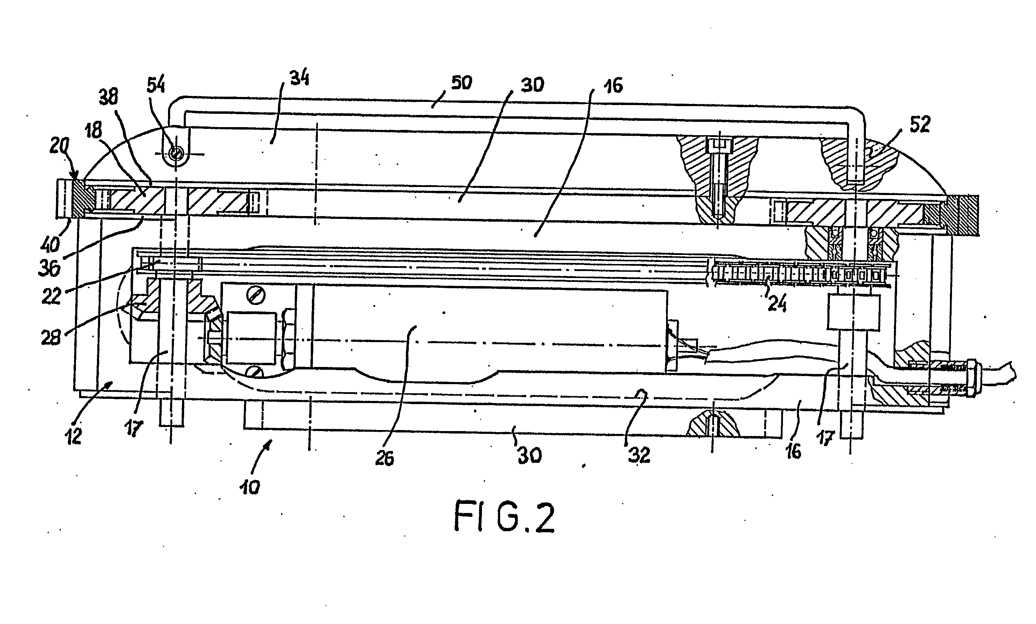

FIG. 2 eine Draufsicht auf das Raupenfahrzeug in größerem Detail,
FIG. 3 einen Querschnitt durch das Raupenfahrzeug, wobei die linke Hälfte den Querschnitt im Bereich einer Antriebswelle und der rechte Teil den Querschnitt im Befestigungsbereich der Seitenschilde zeigt und

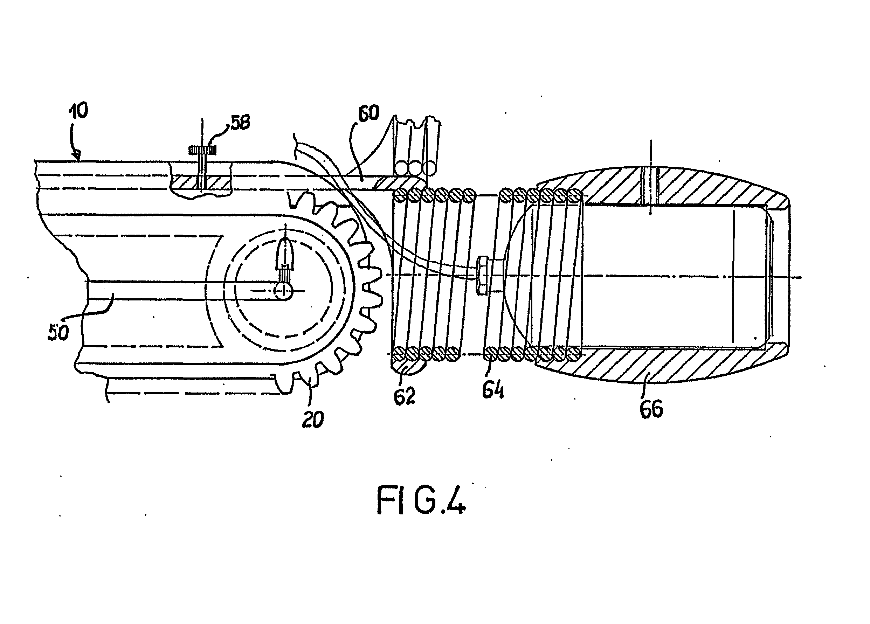

FIG. 4 eine Seitenansicht des Raupenfahrzeugs mit vorgebautem Kameraträger.

Ein allgemein mit 10 bezeichnetes Raupenfahrzeug weist ein oben offenes Gehäuse 12 auf, das mit einem aufge schraubten Deckel 14 geschlossen ist. In den Seitenwänden 16 des Gehäuses 12 sind querliegende durchgehende Antriebswellen 16 kugelgelagert, deren Wellenenden seitlich aus dem Gehäuse 12 herausragen und jeweils ein Zahnrad 18 tragen. Die beiden Zahnräder 18 auf jeder Seite des Gehäuses 12 sind von einem endlosen Zahnriemen 20 umschlungen, der aus dehnbarem Material besteht und im Einbauzustand gegenüber seiner Ursprungsform gedehnt ist.

Im Inneren des Gehäuses 12 ist benachbart einer Seitenwand 16 auf jeder der Antriebswellen 17 ein Zahnrad 22 befestigt. Die beiden Zahnräder 22 sind von einem nichtdehnbaren Antriebsriemen oder Antriebskette 24 umschlungen. Alle vier Zahnräder 18 werden somit angetrieben. In dem verbleibenden Raum des Gehäuses 12 zwischen der Synchronisierkette 24 und der gegenüberliegenden Seitenwand 16 befindet sich ein Antriebsmotor 26, der mit seiner Drehachse in Längsrichtung angeordnet ist und der über ein Kegelradgetriebe 28 die eine Welle 17 antreibt. Beide Seitenwände 16 haben außenseitige Vorsprünge 30, die mit den äußeren Stirnflächen der Antriebsräder 18 im Nabenbereich bündig liegen und den Raum zwischen beiden Antriebsrädern 18 und dem oberen und dem unteren Trum des elastischen Zahnriemens 20 nahezu vollständig ausfüllen. Im Bereich dieses Vorsprunges 30 ist die eine Seitenwand 16 des Gehäuses 12 ausgenommen, wie bei 32 veranschaulicht ist, um zusätzlichen Raum für Aufnahme des Motors 26 zu schaffen.

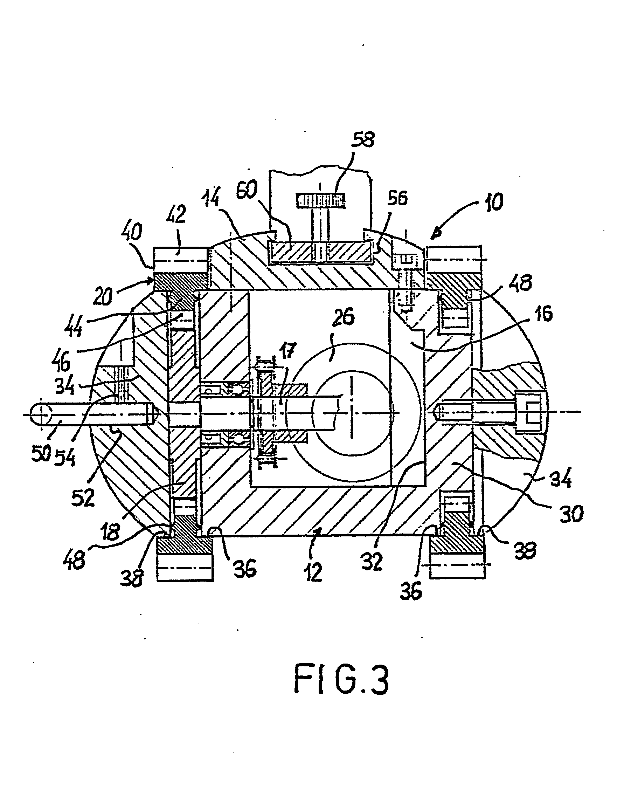

An den beiden Vorsprüngen 30 der Seitenwände 16 des Gehäuses 12 ist jeweils ein massives Seitenschild 34 angeschraubt, dessen Umfangskontur derjenigen der Seitenwände 16 entspricht.Im Querschnitt gemäß FIG. 3 haben die Seitenschilde 34 eine konvex gewölbte Außenkontur. Im Längsschnitt ist die Breite der Außenschilde etwa im Bereich zwischen den beiden Antriebswellen 17 konstant, verjüngt sich dann aber zu den Enden hin. Die Außenränder der Seitenwände 16 setzen sich aus zwei geradlinigen horizontalen Abschnitten und zwei konzentrisch zu den Achsen der Wellen 17 liegenden Abschnitten zusammen und bilden eine innenseitige Gleitbahn 36 für den Zahnriemen 20. Die Seitenschilde 34 haben umlaufende Innenränder, die ebenfalls überall rechtwinklig zu einer vertikalen Längsebene verlaufen und in ihrer Form mit den Außenrändern der Seitenwände 16 übereinstimmen. Diese Innenränder der Seitenschilde 34 bilden äußere Gleitbahnen 38 für die Zahnriemen 20.

Jeder Zahnriemen 20 besteht im Querschnitt aus einem verbreiterten Kopf 40, der eine Außenverzahnung in Form von Querrippen 42 aufweist. An diesen Kopfteil 40 schließt sich beidseitig nach innen abgesetzt ein Rumpfteil 44 an, der in einer Innenverzahnung 46 endet, die mit den Zahnrädern 18 formschlüssig zusammenwirkt. Die Innenverzahnung 46 hat eine Breite gleich der des Zahnrades 18 außerhalb des Nabenbereiches und diese Breite ist etwas kleiner als der Abstand zwischen Seitenwand 16 und Seitenschild 34, sodaß diese Innenverzahnung 46 und der Außenbereich der Zahnräder 18 im Abstand von Seitenwand 16 und Seitenschild 34 liegt. Der Rumpfbereich 44 des Zahnriemens 20 trägt beidseitig jeweils eine ringsumlaufende Rippe 48, die an der Seitenwand 16 bzw. dem Seitenschild 34 anliegt und eine zusätzliche Abdichtung bewirkt.

An den Seitenschilden 34 sind längsverlaufende U-Bügel 50 lösbar befestigt, die eine Länge etwa gleich dem Achsabstand des Fahrzeugs 10 haben. Um eine leichte Austauschbarkeit gegen solche Bügel 50 anderer seitlicher Ausladung zu gestatten sind in jedem Seitenschild 34 zwei Querbohrungen 52 vorgesehen, in die die Schenkel des Bügels 50 eingesteckt und mittels Klemmschrauben 54 von oben her festgeklemmt sind.

In der Deckwand 14, die im Querschnitt ebenfalls außen konvex gewölbt ist, befindet sich ein mindestens von vorn zugänglicher Längsschlitz 56, der beidseitig hinterschnitten ist, sodaß sich ein C-förmiger Querschnitt ergibt. Der Schlitz 56 bildet eine Aufnahme für einen eingeschobenen und mittels einer Klemmschraube 58 festklemmbaren Kameraträger 60, der über das Raupenfahrzeug 10 nach vorn vorsteht und am Ende einen Haltering 62 aufweist, in dem eine Schraubenfeder 64 befestigt ist, deren vorderes Ende in einem Hohlkörper 66 eingesetzt ist, in die eine Kamera eingeschoben und festgeklemmt werden kann.

Für die Funktion ist wesentlich, daß die Zahnriemen 18 aus dehnbarem Material bestehen und ihr Umfang so bemessen ist, daß sie nur in gedehntem Zustand auf den Antriebsrädern 18 montiert werden können. Damit wird sichergestellt, daß die an den Gleitflächen 36, 38 der Seitenwände 16 und der Seitenschilde 34 anliegenden Schultern des Zahnriemens 20 kraftschlüssig abdichten und diese Abdichtung durch das hohe Gewicht des Fahrzeugs 10 im Bereich der bodenseitigen Gleitflächen 36, 38 noch verstärkt wird. Abgesehen von den Zahnlücken der Antriebsräder 18 und der Innenverzahnung 46 der Zahnriemen 20 sind nahezu keine Hohlräume mehr innerhalb des vom Zahnriemen 20 umschlossenen Bereiches vorhanden, sodaß die Gefahr von Schmutzansammlung auf ein Minimum reduziert ist.

**Patentansprüche**

1. Raupenfahrzeug für den Einsatz in Röhren und Kanälen, insbesondere zum Transport einer Fernsehkamera, mit Fahrgestell, Antriebsmotor (26), Getriebe (28) sowie einer vorderen und einer hinteren Welle (17), von denen mindestens eine mit dem Getriebe (28) in Antriebseingriff steht, und mit vier Rädern (18), die paarweise je von einem endlosen Riemen (20) umschlungen sind, wobei das Fahrgestell von einem kastenförmigen Gehäuse (12) gebildet wird, aus dessen Seitenwänden (16) die Wellen (17) herausragen, und am Gehäuse (12) Seitenschilde (34) lösbar befestigt sind, die die Riemen (20) wenigstens teilweise seitlich abdecken und je mit dem Gehäuse (12) einen Spalt begrenzen, in den der Riemen (20) eingreift, dadurch gekennzeichnet, daß die vier Räder (18) als Zahnräder ausgebildet sind, daß jeder Riemen (20) im Querschnitt T-förmig mit einem schmalen Rumpf (44) und unter Bildung seitlicher Schultern mit einem verbreiterten Kopf (40) ausgebildet ist, daß am Rumpf (44) jedes Riemens (20) eine Innenverzahnung (46) ausgebildet ist, die mit den Zahnrädern (18) in Eingriff steht, daß das Gehäuse (12) allseitig geschlossen ist, daß jedes Seitenschild (34) zwei Zahnräder (18) und den Rumpf (44) des sie verbindenden Zahnriemens (20) ringsum seitlich abdeckt, daß der Spalt ein ringsumlaufender Umfangsspalt ist, der von dem Zahnriemen (20) nach außen geschlossen ist und daß beidseitig benachbart jedes Umfangsspaltes an der Seitenwand (16) des Gehäuses (12) und dem Seitenschild (34) ringsumverlaufende Gleitflächen (36, 38) ausgebildet sind, an denen der Zahnriemen (20) mit seinen seitlichen Schultern abdichtend anliegt.

2. Raupenfahrzeug nach Anspruch 1, dadurch gekennzeichnet, daß der Zahnriemen (20) aus dehnbarem Material besteht und im nicht montiertem Zustand einen kleineren Umfang hat als im Montagezustand.

3. Raupenfahrzeug nach Anspruch 1 oder 2, dadurch gekennzeichnet, daß die einander zugewandten Seitenflächen des Gehäuses (12) und Seitenschilde (34) vom Rumpfbereich (44) des Zahnriemens (20) jeweils in geringem Abstand angeordnet sind.

4. Raupenfahrzeug nach Anspruch 3, dadurch gekennzeichnet, daß im Rumpfbereich (44) des Zahnriemens (20) beidseitig je eine seitliche ringsumlaufende Rippe (48) ausgebildet ist, und daß beide Rippen (48) an den Seitenflächen des Gehäuses (12) und des Seitenschildes (34) anliegen.

5. Raupenfahrzeug nach einem der Ansprüche 1 bis 4, dadurch gekennzeichnet, daß der zwischen den beiden Zahnrädern (18) auf jeder Seite des Gehäuses (12) und dem oberen und unteren Trum des Zahnriemens (20) gebildete Hohlraum durch einen Vorsprung (30) des Gehäuses (12) oder des Seitenschildes (34) wenigstens nahezu ausgefüllt ist.

6. Raupenfahrzeug nach einem der Ansprüche 3 bis 5, dadurch gekennzeichnet, daß der Gehäuseboden außen eben ausgebildet ist und die zwischen Kopf- und Rumpfbereich (40, 44) des Zahnriemens (20) gebildeten Schultern in dieser Ebene geführt sind.

7. Raupenfahrzeug nach einem der Ansprüche 1 bis 6, dadurch gekennzeichnet, daß die beiden Wellen (17) innerhalb des Gehäuses (12) Zahnräder (22) tragen, die durch einen nichtdehnbaren Zahnriemen oder Kette (24) miteinander verbunden sind.

8. Raupenfahrzeug nach einem der Ansprüche 1 bis 7, dadurch gekennzeichnet, daß an den Seitenschilden (34) etwa in deren halber Höhe seitlich jeweils ein nach außen weisender, sich über mindestens deren halbe Länge erstreckender Bügel (50) auswechselbar angebracht ist.

9. Raupenfahrzeug nach einem der Ansprüche 1 bis 8, dadurch gekennzeichnet, daß das Gehäuse (12) aus einem oben offenen Kasten besteht, der durch einen abnehmbaren Deckel (14) geschlossen ist und daß der Deckel (14) einen in seiner Längsrichtung verlaufenden Schiebeschlitz (56) mit C-förmigem oder schwalbenschwanzförmigem Querschnitt aufweist, in dem ein Kameraträger (60) herausziehbar befestigt ist.

10. Raupenfahrzeug nach einem der Ansprüche 1 bis 9, dadurch gekennzeichnet, daß sich ein allseitig elastisch biegsames Zwischenglied (64) über das Vorderende des Gehäuses (12) nach vorn erstreckt und einen Kameraaufnahmeteil (66) trägt.

## Claims

1. A tracked vehicle for use in pipes and ducts, particularly for the transportation of a television camera, having a chassis, a drive motor (26), gears (28), a front a rear shaft (17) of which at least one is in driving engagement with the gears (28), and four wheels (18) in pairs, each pair being encircled by an endless belt (20), the chassis being formed from a box-shaped housing (12) from whose side walls (16) the shafts (17) project, and side shields (34) being detachably secured to the housing (12), the side shields laterally and at least partially covering the belts (20) and, together with the housing (12), each limiting a slit into which the belt (20) engages, characterized in that the four wheels (18) are designed as toothed wheels, in that each belt (20) is T-shaped in cross-section with a narrow trunk (44) and, with the formation of lateral shoulders, a widened head, in that an internal toothing (46) is formed on the trunk (44) of each belt (20), the internal toothing engaging with the toothed wheels (18), in that the housing (12) is closed on all sides, in that each side shield (34) covers, laterally and all the way round, two toothed wheels (18) and the trunk (44) of the toothed belt (20) connecting them, in that the slit is a circumferential slit running all the way round and is closed towards the outside by the toothed belt (20), and in that sliding surfaces (36, 38) which run all the way round are formed on both sides adjacent to each circumferential slit in the side wall (16) of the housing (12) and in the side shield (34), the toothed belt abutting against the sliding surface (36, 38) in a sealing manner with its lateral shoulders.

2. A tracked vehicle in accordance with claim 1, characterized in that the toothed belt (20) is composed of an expansible material and has a smaller circumference in the non-installed state than when installed.

3. A tracked vehicle in accordance with claim 1 or 2, characterized in that the facing side surfaces of the housing (12) ans side shields (34) are in each case arranged at a short distance from the trunk area (44) of the toothed belt (20).

4. A tracked vehicle in accordance with claim 3, characterized in that in the trunk area (44) of the toothed belt (20) a lateral rib (48) which runs all the way round is formed on each of the two sides, and in that both ribs (48) abut against the side surfaces of the housing (12) and of the side shield (34).

5. A tracked vehicle in accordance with any one of claims 1 to 4, characterized in that the hollow space formed between the two toothed wheels (18), situated on each side of the housing (12), and the upper and lower side of the toothed belt (20) is filled, at least substantially, by a projection (30) of the housing (12) or of the side shield (34).

6. A tracked vehicle in accordance with any one of claims 3 to 5, characterized in that the housing base is formed flat on the outside, and the shoulders formed between the head and trunk areas (40, 44) of the toothed belt (20) are guided in this plane.

7. A tracked vehicle in accordance with any one of claims 1 to 6, characterized in that the two shafts (17) within the housing (12) carry toothed wheels (22) connected to one another by a non-expansible toothed-belt or chain (24).

8. A tracked vehicle in accordance with any one of claims 1 to 7, characterized in that in each case a handle (50) is removably and laterally fastened to the shields (34) at approximately half the height of the latter, the handles being directed towards the outside and extending over at least half the length of the side shields.

9. A tracked vehicle in accordance with any one of claims 1 to 8, characterized in that the housing (12) is composed of a box open at the top and closed by a removable cover (14), and in that the cover (14) has a sliding aperture (56) which runs in the longitudinal direction ans has a C-shaped or dovetailed cross-section, a camera mount (60) being secured in this aperture so as to be withdrawable.

10. A tracked vehicle in accordance with any one of claims 1 to 9, characterized in that a universally elastically-flexible intermediate member (64) extends forwardly beyond the front end of the housing (12) and carries a camera-receiving part (66).

**Revendications**

1. Véhicule à chenilles pour utilisation dans des tubes et canaux, en particulier pour le transport d'une caméra de télévision, avec châssis, moteur d'entraînement (26), boîte de vitesses (28) ainsi qu'un essieu avant et un essieu arrière (17), desquels au moins l'un se trouve en engagement d'entraînement avec la boîte de vitesses, et à quatre roues (18) enlacées par pair chaque fois d'une courroie sans fin (20), le châssis étant formé d'un boîtier (12) en forme de caisson, des parois latérales (16) duquel rassortent les essieux (17) et au boîtier étant fixées, de manière amovible, des plaques latérales (34) qui recouvrent latéralement, au moins en partie, les courroies (20) et définissent, chacune, avec le boîtier (12) une fente dans laquelle s'engage la courroie (20), caractérisé en ce que les quatre roues sont (18) construites comme roues dentées, que chaque courroie (20) est de section en forme de T avec un tronc étroit (44) et une tête (40) élargie en formant des épaules latérales, qu'au tronc (44) de chaque courroie (20) est formée une endenture intérieure (46) qui s'emboîte dans les roues dentées (18), que le boîtier (12) est fermé de tous les côtés, que chaque plaque latérale (34) recouvre latéralement tout autour deux roues dentées (18) et le tronc (44) de la courroie dentée (20) qui les relie, que la fente est une fente périphérique s'étendant sur tout le pourtour et fermée vers l'extérieur par la courroie dentée (20) et qu'il est formé, des deux côtés, près de chaque fente périphérique, à la paroi latérale (16) du boîtier (12) et à la plaque latérale (34), des surfaces de glissement (36, 38) s'étendant sur tout le pourtour, contre lesquelles se trouve, de manière étanche, la courroie dentée (20) avec ses épaules latérales.

2. Véhicule à chenilles suivant la revendication 1, caractérisé en ce que la courroie dentée (20) est en un matériau élastique et a un pourtour plus petit à l'état non monté qu'à l'état monté.

3. Véhicule à chenilles suivant la revendication 1 ou 2, caractérisé en ce que les faces latérales orientées l'une vers l'autre du boîtier (12) et les plaques latérales (34) sont chaque fois disposées à une distance réduite de la partie de tronc (44) de la courroie dentée (20).

4. Véhicule à chenilles suivant la revendication 3, caractérisé en ce que, dans la partie de tronc (44) de la courroie dentée (20), il est formé, des deux côtés, une nervure (48) s'étendant sur tout le pourtour et que les deux nervures (48) se trouvent contre les faces latérales du boîtier (12) et de la plaque latérale (34).

5. Véhicule à chenilles suivant l'une des revendications 1 à 4, caractérisé en ce que l'espace creux formé entre les deux roues dentées (18) de chaque côté du boîtier (12) et le brin supérieur et inférieur de la courroie dentée (20) est au moins pratiquement rampli par une saillie (30) du boîtier (12) ou de la plaque latérale (34).

6. Véhicule à chenilles suivant l'une des revendications 3 à 5, caractérisé en ce que le fond du boîtier est construit lisse du côté extérieur et que les épaules formées entre les parties de tête et de tronc (40, 44) de la courroie dentée (20) sont guidées dans ce plan.

7. Véhicule à chenilles suivant l'une des revendications 1 à 6, caractérisé en ce que les deux essieux (17) portent, à intérieur du boîtier (12), des roues dentées (22) reliées entre elles par une courroie dentée ou chaîne (24) non élastique.

8. Véhicule à chenilles suivant l'une des revendications 1 à 7, caractérisé en ce que, aux plaques latérales (34), environ à leur mi-hauteur, il est chaque fois placé latéralement, de manière échangeable, un étrier (50) dirigé vers l'extérieur et s'étendant sur au moins la moitié de leur longueur.

9. Véhicule à chenilles suivant l'une des revendications 1 à 8, caractérisé en ce que le boîtier (12) se compose d'un caisson ouvert au-dessus, fermé par un couvercle (14) amovible et que le couvercle (14) présente une rainure de coulissement (56) à section en forme de C ou en forme de queue-d'aronde, s'étendant dans son sens longitudinal, dans laquelle est fixé, de manière amovible, un support de caméra (60).

10. Véhicule à chenilles suivant l'une des revendications 1 à 9, caractérisé en ce qu'un membre intermédiaire (64) flexible, élastique de tous les côtés, s'étend vers l'avant, au-dessus de l'extrémité avant du boîtier (12) et porte une pièce de réception de caméra (6).

FIG.1

FIG.2

FIG.3

FIG.4

EP 0 234 203 B1